# EUROPÄISCHE PATENTSCHRIFT

(11) **EP 0 992 194 B1**
(45) Veröffentlichungstag und Bekanntmachung des Hinweises auf die Patenterteilung: **22.01.2003**
(21) Anmeldenummer: 99119413.5
(22) Anmeldetag: 30.09.1999
(51) Int. Cl.: A22C 13/00

(54) **Nahrungsmittelhülle**
Food casings
Enveloppes pour aliments

(30) Priorität: 08.10.1998 DE 19846305
(43) Veröffentlichungstag der Anmeldung: 12.04.2000
(73) Patentinhaber: Sun Products Marketing und Manufacturing AG, 9496 Balzers (LI)
(72) Erfinder:
(74) Vertreter: Brommer, Hans Joachim, Dr.-Ing.

(56) Entgegenhaltungen:
- WO-A-97/12758
- WO-A-97/36798
- WO-A-98/31731
- DE-A- 2 312 385
- DE-A- 3 930 834
- DE-A- 4 001 131
- DE-A- 4 417 244
- DE-A- 19 729 659
- DE-B- 1 504 982

## Beschreibung

Die Erfindung betrifft eine Nahrungsmittel-Barrierehülle für Lebensmittel, die in der Hülle gebrüht, gekocht oder anderweitig erhitzt werden, insbesondere für Koch- oder Brühwürste, Schinken, Pökelwaren oder Schmelzkäse.

Bei derartigen Lebensmitteln wird zunehmend ein Farb- und/oder Aromatransfer während des Koch- oder Brühprozeßes von der Hülle auf das Lebensmittel gewünscht.

Brühwurst und Kochpökelwaren werden auch heute noch in großem Umfang, länderspezifisch mehr oder weniger, im Cellulosefaserdarm hergestellt. Dieser Cellulosefaserdarm hat eine hohe Wasserdampf- und Gasdurchlässigkeit, um die Produkte während des Produktionsprozesses zu räuchern.

Es ist ferner bekannt, daß Cellulosefaserdärme mit Flüssigrauch impregniert werden, um die Räucherzeit zu verkürzen.

Die Herstellung von Lebensmitteln im Cellulosefaserdarm ist jedoch immer, durch die Wasserdampf- und Gasdurchlässigkeit der Hülle, mit Gewichts-, Geschmacks- und Aromaverlust beim Herstellungsprozeß, beim Kühlen und bei der Lagerung verbunden.

Produkte, hergestellt, im Cellulosefaserdarm, haben somit eine sehr geringe, begrenzte Haltbarkeit und müssen schnellstens nach der Herstellung, mittels einer Barriereverpackung, zweitverpackt werden um diesen Nachteil auszugleichen. Eine Rekontamination oder Reinfektion, die eine Qualitätseinbuße und Haltbarkeitsverkürzung darstellt, kann auch durch die zusätzliche Verpackung nicht ausgeschlossen werden und außerdem verursacht sie zusätzliche Kosten.

Um den Nachteil der Wasserdampf- und Gasdurchlässigkeit zu vermeiden, wurden speziell für die Großindustrie, Kunststoffhüllen aus Materialien entwickelt, welche über eine Wasserdampf- und Gasundurchlässigkeit verfügen, sogenannte cook + ship, das heißt brühen und versenden ohne zusätzliche Zweitverpackung.

Bei der Verwendung solcher Kunststoffhüllen entsteht weder beim Produktionsprozeß noch bei der Lagerung und dem Versand Gewichts-, Aroma- und Geschmacksverlust, jedoch verfügt das Fertigprodukt nicht über den typischen Rauchgeschmack, der bei vielen Produkten vom Verbraucher erwünscht und erwartet wird.

Die Impregnierung von reinen Kunststoffhüllen mit Aromastoffen hat auch nicht zum Erfolg geführt, da die verwendeten Kunststoffe nicht genügend Impregnierungsstoff aufnehmen und speichern können und dieser bei der Konfektionierung und bei der Befüllung der Kunststoffhüllen wieder abgestreift wird, da er von den Kunststoffschichten nicht in ausreichender Menge aufgenommen und gespeichert werden kann.

Um dem in der Kunststoffhülle gefertigten Produkt den gewünschten Rauchgeschmack und die typische Farbe zu verleihen, muß die Kunststoffhülle nach dem Herstellungsprozeß entfernt werden und das Produkt dann auf herkömmliche Weise geräuchert oder mit Flüssigrauch behandelt werden. Bei diesem nachgeschalteten Prozeß besteht erneut die Möglichkeit des Gewichts-, Aroma- und Geschmacksverlustes, außerdem die Gefahr der Rekontamination und Reinfektion und nach der Behandlung ist wieder eine Zeitverpackung zwingend notwendig.

WO 98/31731 beschreibt eine Mehrschichthülle welche eine Sauerstoffasweisende Schicht aufweist die mit einer mit Aroma- und Farbstoff enthaltenden Schicht beschichtet ist.

Die Aufgabe der vorliegenden Erfindung liegt deshalb darin, eine Nahrungsmittel-Barrierehülle anzugeben, die sich einerseits durch hohe Dichtheit, andererseits aber auch durch gute Aufnahmefähigkeit und Speicherkapazität für die gewünschten Aroma- und/oder Farbstoffe aufweist und sich durch eine spätere, ausreichende Übertragung dieser Stoffe auf das Nahrungsmittel auszeichnet.

Diese Aufgabe wird erfindungsgemäß dadurch gelöst, daß die Hülle aus zumindest einer Wasserdampf- und/oder Gas- undurchlässigen Folie besteht und eine mit ihr verbundene saugfähige Innenlage aus Einzelfasern oder einem Gewebe, Gewirk, Gestricke, vorzugsweise aus einem Vlies trägt und daß diese Innenlage mit Farb- und/oder Aromastoffen getränkt ist.

Diese Innenlage hat zunächst den Vorteil einer hohen Aufnahme- und Haltefähigkeit für die Farb- und/oder Aromastoffe. Außerdem haben Untersuchungen der Anmelderin ergeben, daß während des anschließenden Koch- oder Brühprozeßes eine wesentlich bessere Übertragung dieser Stoffe auf das Nahrungsmittel stattfindet als bei herkömmlichen Hüllen, denn die Undurchlässigkeit der Hülle gegenüber Wasserdampf, vorzugsweise auch gegenüber Gas verhindert, daß die Farb- oder Aromastoffe während des Kochprozesses ausgewaschen werden.

Es hat sich überraschend gezeigt, daß für die Innenlage bereits außerordentlich geringe Wandstärken in der Größenordnung von einigen Hundertstel mm bis 1/10 mm ausreichend sind, um die Farb- und/oder Aromastoffe aufzunehmen. Aus diesem Grund ist es besonders zweckmäßig, wenn die Innenlage aus Einzelfasern oder einem dünnen Vlies besteht. Als Material hierfür empfehlen sich Baumwollfasern, Cellulosefasern, auch regenerierte Cellulosefasern, Viskosefasern oder Mischungen hiervon. Man erhält dadurch bei geringem Materialeinsatz eine optimale Speicherkapazität für die Farb- oder Aromastoffe.

Zweckmäßig erfolgt die Verbindung der Innenlage mit der Hülle durch Laminierung und/oder Beschichtung, so daß man ein einstückiges, leicht zu handhabendes Laminat erhält. Zur Verbindung kann auch ein Kleber verwendet werden. Als Klebstoff eignet sich insbesondere extrudiertes Polyethylen in nahezu flüssiger Form. Mittels diesem extrudierten Polyethylen wird das saugfähige Material der Innenlage auf die Innenseite der Hülle laminiert.

Weitere Merkmale und Vorteile der Erfindung ergeben sich aus der nachfolgenden Beschreibung eines Ausführungsbeispieles anhand der Zeichnung. Dabei zeigt
- Figur 1: einen Querschnitt durch die Hülle mit Innenlage und
- Figur 2: eine Draufsicht auf eine Hülle in Form eines Beutels.

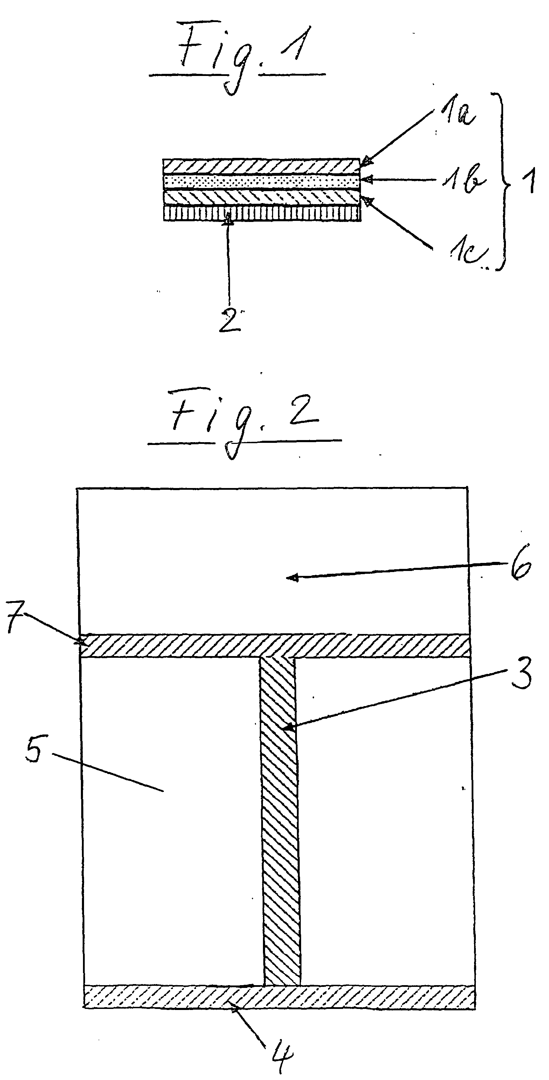

Gemäß Figur 1 weist die Hülle außen eine Barrierehülle 1 auf. Sie besteht aus zwei äußeren Polyethylenlagen 1a, 1c und einer Zwischenlage 1b aus Polyamid und hat die Aufgabe, das Nahrungsmittel luft- und gasdicht, insbesondere gegenüber Wasserdampf und Sauerstoff abzuschirmen, damit das Nahrungsmittel beim Koch- oder Brühprozeß nicht ausgelaugt wird, also nicht an Aroma oder Farbe verliert. Zweckmäßig ist die Barrierehülle schrumpffähig, wodurch ein faltenfreies Endprodukt entsteht. Außerdem entsteht keinerlei Gewichtsverlust während des Fertigungsprozesses, der Lagerung und dem Transport.

An der Innenseite ist die beschriebene Barrierehülle 1 mit einer saugfähigen Innenlage 2, etwa einem Vlies aus Cellulosefasern beschichtet. Sie dient als Träger für die gewünschten Farb- und/oder Aromastoffe. Es kann sich dabei um Zuckercouleur, Gewürzextrakte, Rauchbestandteile, Flüssigrauch, Marinaden, Fruchtaromen und andere lebensmittelrechtlich zugelassene Stoffe handeln. Sie können kontinuierlich auf die saugfähige Innenlage 2 aufgebracht werden, entweder durch ein Sprührohr, an dem die zum Schlauch geformte Hülle entlanggeführt wird oder durch ein Flüssigkeitsbad, an dem die innere Hüllwand entlanggleitet oder mittels einer Flüssigkeitsblase, die durch die Hülle geführt wird.

Statt dessen kann die Innenlage 2 aber auch in flacher Form mit den gewünschten Farb- und/oder Aromastoffen bedruckt werden. Nach dem Trocknen wird die Folie dann mittels schweißfähigem, hitzebeständigem Klebeband oder durch Heißverschweißung an den überlappenden Rändern in die Schlauchform gebracht.

Die impregnierte Hülle kann sowohl im feuchten als auch im getrockneten Zustand verwendet und verarbeitet werden.

Soll die Hülle nach Aufnahme der Farb- und/oder Aromastoffe durch die saugfähige Innenlage getrocknet werden, empfiehlt sich die Verwendung solcher Farb- und/oder Aromastoffe, die bei der Trocknung nicht flüchtig werden.

Alle vorstehenden Materiallagen sind zu einem Film laminiert, wobei zweckmäßig ein Haftvermittler verwendet wird. Seine Gesamtdicke liegt meist unter 1/10 mm. So beträgt die Dicke der beiden Polyethylenlagen 1a und 1c jeweils 10 bis 60 Mikron, die Dicke der Zwischenlage 1b aus Polyamid 10 bis 20 Mikron. Die dem Nahrungsmittel zugewandte Polyethylenlage 1c wird zweckmäßig naß auf die bereits miteinander verbundenen Schichten 1a und 1b aufextrudiert, so daß sie als Kleber für die anschließend aufzubringende saugfähige Innenlage 2 fungiert.

Für die Innenlage 2 empfiehlt es sich, das absorbierende Material, also das Vlies, die Fasern oder dergleichen in einer Materialstärke von etwa 10 bis etwa 30 g/m² aufzutragen. Anschließend wird diese absorbierende Lage mit den gewünschten Aromastoffen oder Farbträgern imprägniert und gegebenenfalls in die vom Kunden gewünschte Form gebracht, konfektioniert.

Figur 2 zeigt die Hülle in Form eines Beutels. Dazu ist die Hülle zunächst in Schlauchform gebracht und an den überlappenden Längsrändern durch ein unter Hitze aufsiegelbares Band 3 miteinander verbunden worden. Dieses Band 3 wird zumindest mit der Lage 1a der Barrierehülle 1 verschweißt.

Am unteren Ende ist die Hülle durch ein entsprechendes Band 4 verschlossen, wobei der untere Rand gegebenenfalls um 180° umgeklappt wird, um eine dichte Verschweißung zu gewährleisten.

Für das Anschweißen der Bänder 3 und 4 sind Spezialmaschinen erforderlich, die beim Verarbeiter der Hülle, dem Metzgereibetrieb, meist nicht zur Verfügung stehen. Deshalb weist der so gebildete Beutel 5 an seinem offenen oberen Rand einen Überstand 6 auf, der sich über den gesamten Umfang erstreckt und mittels eines siegelbaren Bandes 7 mit dem Beutel verbunden ist. Dieser Überstand 6 hat keine saugfähige Innenlage 2 wie der Beutel 5 sondern besteht nur aus einem leicht verschweißbaren Kunststoffmaterial, insbesondere Polyethylen, das vom Kunden in einfacher Weise verschweißt werden kann, um den Beutel 5 nach dem Einfüllen des Fleisches und dem Evakuieren zu verschließen.

### TEST BEISPIEL

Nachdem die Hülle mit Flüssigrauch impregniert wurde, wurde eine feine Wurstemulsion eingefüllt, mittels eines Aluminiumclips verschlossen und gebrüht. Die so gefüllte Hülle beziehungsweise Wurst, hatte einen Durchmesser von 60 mm.

Das Resultat war wie folgt:

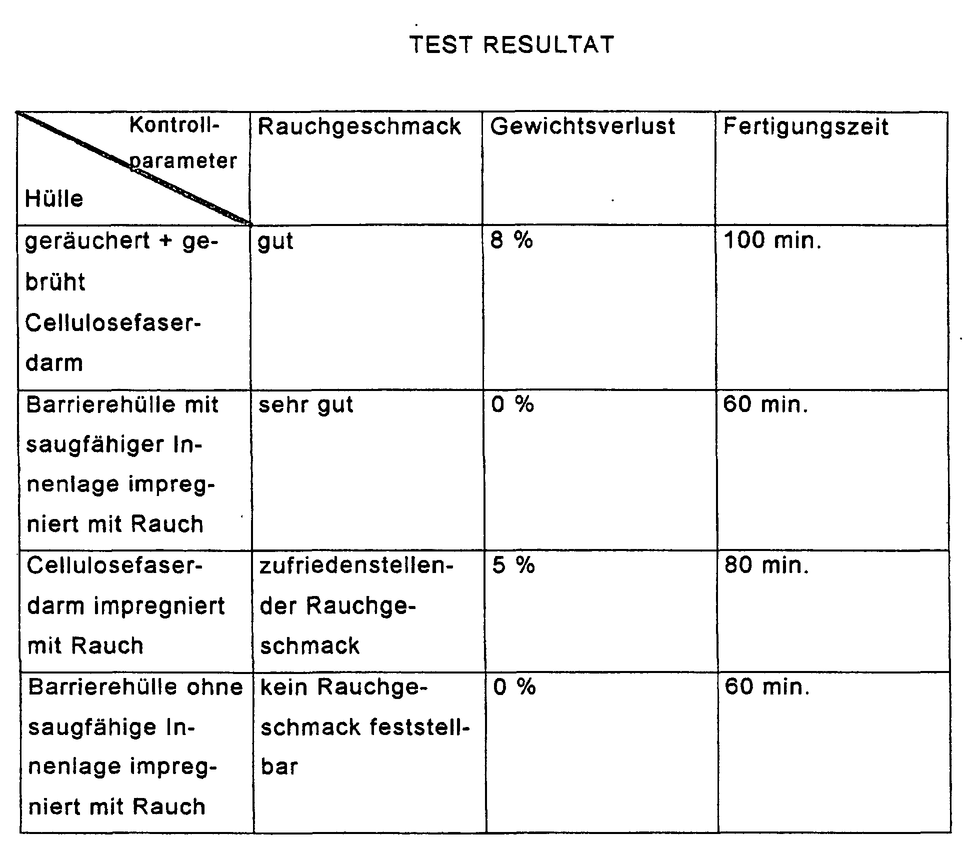

Zusammenfassend bietet die Erfindung den Vorteil, daß das Aroma und/oder die Farbe etc. in hoher Dosierung an der Innenseite der Hülle zur Verfügung gehalten wird, beim Raffen und Füllen der Hülle nicht verloren geht und während des Koch- oder Brühprozeßes zuverlässig auf das eingefüllte Nahrungsmittel transferiert wird. Da die Außenlagen der Hülle undurchlässig sind, können die Stoffe beim Brühprozeß nicht ausgespült werden, wie dies bei einem Faserdarm der Fall ist. Es entstehen keinerlei Gewichts-, Geschmacks- und Aromaverluste, während des Fertigungs- und Brühprozesses, während des Transportes und der Lagerung und die Fertigungszeit bleibt kurz. Das Produkt kann direkt - ohne Zweitverpackung - an den Endverbraucher abgegeben werden.

## Patentansprüche

1. Nahrungsmittel-Barrierehülle für Lebensmittel, die in der Hülle gebrüht, gekocht oder auf andere Weise erhitzt werden, insbesondere für Koch- oder Brühwürste, Schinken, Pökelwaren oder Schmelzkäse,
**dadurch gekennzeichnet,**
**daß** die Hülle aus zumindest einer Wasserdampf - und/oder Gasundurchlässigen Folie (1) besteht und eine mit ihr verbundene saugfähige Innenlage (2) aus Einzelfasern oder einem Gewebe, Gewirk, Gestrikke, vorzugsweise aus einem Vlies trägt und daß diese Innenlage (2) mit Farb- und/oder Aromastoffen getränkt ist.

2. Barrierehülle nach Anspruch 1,
**dadurch gekennzeichnet,**
**daß** die Innenlage (2) aus Baumwollfasern, Cellulosefasern, insbesondere regenerierten Cellulosefasern, Viskosefasern oder Mischungen hiervon besteht.

3. Barrierehülle nach Anspruch 1,
**dadurch gekennzeichnet,**
**daß** sie aus einer Schrumpf-Folie besteht, die zumindest in einem Temperaturbereich zwischen etwa 70° C bis etwa 90° schrumpft.

4. Barrierehülle nach Anspruch 1,
**dadurch gekennzeichnet,**
**daß** die Hülle (1) mit der saugfähigen Innenlage (2) zur Bildung eines Laminates beschichtet ist.

5. Barrierehülle nach Anspruch 1,
**dadurch gekennzeichnet,**
**daß** die Innenlage (2) mit der benachbarten Lage (1c) der Hülle durch einen Kleber verbunden ist.

6. Barrierehülle nach Anspruch 5,
**dadurch gekennzeichnet,**
**daß** der Kleber aus extrudiertem Polyethylen besteht.

7. Barrierehülle nach Anspruch 1,
**dadurch gekennzeichnet,**
**daß** die Hülle (1) an ihrer Außenseite aus zumindest einer dichten Kunststoffolie (1a), insbesondere zumindest einer Polyethylen-Folie und/oder einer Polyamidfolie besteht, die flächig miteinander verbunden sind.

8. Barrierehülle nach Anspruch 1,
**dadurch gekennzeichnet,**
**daß** die Hülle (1) aus 2 Polyethylenfolien (1a, 1c) und einer dazwischen angeordneten Polyamidfolie (1b) besteht, wobei die der Hüllen-Innenseite zugeordnete Polyethylenfolie (1c) naß aufextrudiert ist und als Kleber für die anschließend aufgebrachte saugfähige Innenlage (2) fungiert.

9. Barrierehülle nach Anspruch 1,
**dadurch gekennzeichnet,**
**daß** sie die Form eines Beutels (5) hat und an ihrem offenen Ende einen Überstand (6) aufweist, der ohne die saugfähige Innenlage ausgebildet ist und aus schweißbarer Kunststoff-Folie besteht.

## Claims

1. Barrier wrapping for foodstuffs which are scalded, boiled or heated in another way in the wrapping, particularly for sausages, ham, pickled food or processed cheese, **characterised in that** the wrapping consists of a film (1) which is impermeable at least to water-vapour and/or gas and has joined to it an absorbent inner lining (2) consisting of individual fibres or a woven or knitted fabric, preferably a non-woven fabric, and that this inner lining (2) is impregnated with colourings and/or flavourings.

2. Barrier wrapping as claimed in Claim 1, **characterised in that** the inner lining (2) consists of cotton fibres, cellulose fibres, particularly regenerated cellulose fibres, viscose fibres or mixtures thereof.

3. Barrier wrapping as claimed in Claim 1, **characterised in that** it consists of a shrink-film which shrinks at least in a temperature range between approximately 70°C and approximately 90°C.

4. Barrier wrapping as claimed in Claim 1, **characterised in that in that** the wrapping (1) is coated with the absorbent inner lining (2) in order to form a laminate.

5. Barrier wrapping as claimed in Claim 1, **characterised in that** the inner lining (2) is joined to the adjacent layer (1c) of the wrapping by an adhesive.

6. Barrier wrapping as claimed in Claim 5, **characterised in that** the adhesive consists of extruded polyethylene.

7. Barrier wrapping as claimed in Claim 1, **characterised in that** the wrapping (1) consists on its outer face of at least one dense plastic film (1a), particularly at least one polyethylene film and/or a polyamide film which are joined flush with one another.

8. Barrier wrapping as claimed in Claim 1, **characterised in that** the wrapping consists of two polyethylene films (1a, 1c) and a polyamide film (1b) disposed therebetween, wherein the polyethylene film (1c) associated with the inner face of the wrapping is extruded on in a wet state and functions as an adhesive for the absorbent inner lining (2) which is then applied.

9. Barrier wrapping as claimed in Claim 1, **characterised in that** it has the shape of a bag (5) with an extending portion (6) at its open end which is formed without the absorbent inner lining and consists of weldable plastic film.

## Revendications

1. Enveloppe de protection pour aliments, lesquels aliments ont été bouillis, cuits ou chauffés d'une autre façon dans l'enveloppe, en particulier pour les saucisses à cuire ou à faire chauffer dans l'eau bouillante, le jambon, les denrées saumurées ou les fromages fondus, **caractérisée en ce que** l'enveloppe se compose d'au moins une feuille imperméable à la vapeur d'eau et/ou aux gaz (1) et supporte une couche intérieure absorbante (2) reliée à celle-ci, réalisée à partir de fibres individuelles ou d'un tissu, d'un tricot ou d'un produit maillé, de préférence à partir d'un non-tissé, et **en ce que** cette couche intérieure (2) est imprégnée de substances colorantes et/ou aromatiques.

2. Enveloppe de protection selon la revendication 1, **caractérisée en ce que** la couche intérieure (2) se compose de fibres de coton, de fibres de cellulose, en particulier de fibres de cellulose régénérées, de fibres de viscose, ou de mélanges de ces fibres.

3. Enveloppe de protection selon la revendication 1, **caractérisée en ce qu'**elle se compose d'une feuille thermo-rétractable, qui se rétracte au moins dans une gamme de températures comprises entre environ 70 °C et environ 90 °C.

4. Enveloppe de protection selon la revendication 1, **caractérisée en ce que** l'enveloppe (1) est recouverte de la couche intérieure (2) pour former un stratifié.

5. Enveloppe de protection selon la revendication 1, **caractérisée en ce que** la couche intérieure (2) est reliée à la couche voisine (1c) de l'enveloppe par un adhésif.

6. Enveloppe de protection selon la revendication 5, **caractérisée en ce que** l'adhésif est un polyéthylène extrudé.

7. Enveloppe de protection selon la revendication 1, **caractérisée en ce que** l'enveloppe (1) se compose au niveau de sa face extérieure d'au moins une feuille de plastique étanche (1a), en particulier d'au moins une feuille de polyéthylène et/ou d'une feuille de polyamide, qui sont mutuellement reliées en nappe.

8. Enveloppe de protection selon la revendication 1, **caractérisée en ce que** l'enveloppe (1) se compose de 2 feuilles de polyéthylène (1a, 1c) et d'une feuille de polyamide intercalée entre celles-ci (1b), la feuille de polyéthylène (1c) orientée vers la face intérieure de l'enveloppe étant extrudée par voie humide et faisant office d'adhésif pour la couche intérieure absorbante (2) appliquée ultérieurement.

9. Enveloppe de protection selon la revendication 1, **caractérisée en ce qu'**elle présente la forme d'un sachet (5) et **en ce qu'**elle comporte un bord qui dépasse vers le haut (6) au niveau de son extrémité ouverte, qui est conçu sans couche intérieure absorbante et se compose d'une feuille de plastique scellable.
